# EUROPÄISCHE PATENTSCHRIFT

(11) **EP 4 140 693 B1**
(45) Veröffentlichungstag und Bekanntmachung des Hinweises auf die Patenterteilung: **06.11.2024**
(21) Anmeldenummer: 21193176.1
(22) Anmeldetag: 26.08.2021
(51) Int. Cl.: B29C 63/16

(54) **VERFAHREN ZUR AUFBRINGUNG EINER KLEBEFOLIE AUF EIN BAUTEIL UND HIERFÜR GEEIGNETES WERKZEUG**
METHOD FOR APPLYING AN ADHESIVE FILM TO A COMPONENT AND TOOL FOR SAME
PROCÉDÉ D'APPLICATION D'UNE FEUILLE ADHÉSIVE SUR UN COMPOSANT ET OUTIL APPROPRIÉ

(43) Veröffentlichungstag der Anmeldung: 01.03.2023
(73) Patentinhaber: PPG Advanced Surface Technologies, LLC, Columbus, OH 43212 (US)
(72) Erfinder: Eisenlohr, Jörg, 72202 Nagold (DE); Mencel, Daniel, 73733 Esslingen (DE); Warta, Helge, 71254 Ditzingen (DE)
(74) Vertreter: f & e patent

(56) Entgegenhaltungen:
- WO-A1-2020/148070
- DE-A1- 19 812 402

## Beschreibung

Die nachfolgend beschriebene Erfindung betrifft ein Verfahren und ein Werkzeug zum Aufbringen einer Klebefolie auf ein Bauteil.

### ANWENDUNGSGEBIET UND STAND DER TECHNIK

Klebefolien werden in vielen Anwendungsbereichen eingesetzt, beispielsweise zu dekorativen Zwecken, etwa um ein Farbmuster auf eine Oberfläche zu übertragen, aus funktionalen Gründen, etwa als Schutz für lackierte Oberflächen, oder zur Aufbringung von Schriftzügen und ähnlichem. Vor allem finden Klebefolien in der Serienproduktion von Kraftfahrzeugen zunehmend Verwendung, dort beispielsweise als Steinschlagschutz, zum Aufbringen von Modellbezeichnungen und natürlich zu Zwecken der optischen Gestaltung.

In der Regel ist der Aufwand, der etwa beim Aufbringen eines Farbmusters mittels einer Klebefolie entsteht, deutlich geringer als bei der Bildungsolcher Muster in einem mehrstufigen Lackierprozess. Allerdings ist das Aufbringen von Klebefolien in einer Serienproduktion alles andere als trivial. Je größer die Klebefolie ist, desto schwieriger ist es, sie richtig auf der zu beklebenden Oberfläche zu positionieren und ohne Lufteinschlüsse und Faltenbildung zu verkleben. Eine Automatisierung dieser Prozesse ist bislang nicht gelungen. So wird die Applikation von Klebefolien beispielsweise in der Serienproduktion von Kraftfahrzeugen bis heute manuell durchgeführt.

Aus der US 6197397 B1 sind Klebefolien bekannt, die mikrostrukturierte Kanäle innerhalb der Klebeschicht umfassen. Diese Kanäle sollen das Entweichen von Luft bei der Applikation der Klebefolien ermöglichen, um Lufteinschlüsse zu vermeiden und manuelle Nacharbeiten zur Entfernung derselben überflüssig zu machen. Sie sind für eine automatisierte Verarbeitung daher besser geeignet als klassische Klebefolien ohne die mikrostrukturierten Kanäle.

Allerdings sind solche Klebefolien sehr teuer. Weiterhin eignen sie sich aufgrund der mikrostrukturierten Klebeschicht weniger zur Bildung hochwertiger Oberflächen. In der Regel umfassen Klebefolien eine Trägerfolie, deren eine Seite mit einer Klebeschicht und deren andere Seite mit einer gegebenenfalls mehrlagigen Lackschicht bedeckt ist. Bei der Verwendung sehr dünner Trägerfolien hinterlässt die Mikrostruktur auch nach dem Aufkleben noch sichtbare Spuren. Die Verwendung besonders dicker Klebefolien ist grundsätzlich nicht gewünscht. Mit dicken Folien lässt sich das Problem zwar lösen. Diese tragen aber stark auf dem Substrat auf. Ohne Überlackierung mit einem Klarlack führt auch dies nicht zu zufriedenstellenden Ergebnissen.

Aus der noch unveröffentlichten PCT-Anmeldung der Anmelderin mit dem Aktenzeichen PCT/EP2019/086500 sind ein Verfahren und ein Werkzeug zum Aufbringen einer Klebefolie auf die Oberfläche eines Werkstücks bekannt, die die genannten Probleme adressieren. Hierzu wird eine Klebefolie mit einer Klebeschicht mit Hilfe eines automatisierten Systems zwischen derzu beklebenden Oberfläche und einer elastischen Membran positioniert. In Folge eines Unterdrucks, der zwischen der Membran und der Oberfläche angelegt wird, wölbt sich die Membran unter Ausbildung einer konvexen und einer konkaven Seite in Richtung der Oberfläche, bis sie mit der konvexen Seite voran die Oberfläche kontaktiert, so dass die Klebeschicht der Klebefolie von der Membran vollflächig an die Oberfläche gepresst wird. Der Grad der Wölbung der Membran wird hierbei durch eine Abstimmungder Druckverhältnisse auf beiden Seiten der Membran geregelt. So ist es beispielsweise möglich, die durch Anlegen des Unterdrucks erzeugte Wölbung der Membran durch einen entsprechenden Überdruck auf der Rückseite der Membran zu unterstützen.

Diese Vorgehensweise führt bei massiven, strukturell verstärkten Werkstücken zu hervorragenden Ergebnissen. Probleme treten allerdings auf, wenn beispielsweise ein sehr dünnes, flexibles Blech beschichtet werden soll. Durch das Anlegen des erwähnten Unterdrucks kann in solchen Fällen nicht nur die Membran, sondern auch das Blech deformiert werden, letzteres gegebenenfalls dauerhaft. Darüber hinaus erschwert eine Deformation der zu beklebenden Oberfläche die Prozesskontrolle, da sich der Abstand zwischen der Oberfläche und der Membran plötzlich und unkontrolliert ändern kann.

Ein verwandtes, in Details aber dennoch sehr unterschiedliches Verfahren ist aus der DE 19812402 A1 bekannt. Dieses Dokument befasst sich mit dem Aufbringen von Folien auf Werkstücke wie Karosseriebleche. Hierzu wird die aufzubringende Folie in eine konvexe Form überführt und an die zu beschichtende Oberfläche gedrückt. Dies geschieht mit Hilfe eines Rahmens, in den eine Membran eingespannt ist, an der die Folie fixiert wird. Das Anpressen der Folie erfolgt mittels Unterdruck. Im Unterschied zu dem in der PCT/EP2019/086500 beschriebenen Verfahren wird eine Abstimmung der Druckverhältnisse auf beiden Seiten der Membran allerdings nicht beschrieben. Stattdessen ist der Rückraum hinter der Membran mit einem einen elastischen Schaumstoff gefüllt.

### AUFGABE UND LÖSUNG

Der nachfolgend beschriebenen Erfindung lag die Aufgabe zu Grunde, das aus der PCT/EP2019/086500 bekannte Verfahren sowie das beschriebene Werkzeug zu verbessern. Insbesondere sollten ein automatisierbares Verfahren und ein Werkzeug zum Aufbringen von Klebefolien entwickelt werden, die sich in eine Serienproduktion, beispielsweise in eine zur Produktion von Kraftfahrzeugen vorgesehene Fertigungsstraße, integrieren lassen.

Zur Lösung dieser Aufgabe schlägt die Erfindung das Verfahren mit den in Anspruch 1 genannten Merkmalen und das Werkzeug mit den in Anspruch 10 genannten Merkmalen vor. Weiterbildungen der Erfindung sind Gegenstand von Unteransprüchen.

Das erfindungsgemäße Verfahren zum Aufbringen einer Klebefolie umfasst stets die Schritte:
a. Bereitstellen eines Bauteils,
b. Bereitstellen einer Klebefolie, die eine Klebeschicht umfasst, und
c. Aufbringen der Klebefolie auf eine Oberfläche des Bauteils.

Für das Aufbringen der Klebefolie gemäß dem vorgenannten Merkmal c. sind erfindungsgemäß die folgenden Merkmale vorgesehen:
d. Die Klebefolie wird zwischen der Oberfläche des Bauteils und einer elastischen Membran positioniert, und
e. die die elastische Membran wird zumindest bereichsweise in einen gewölbten Zustand mit einer konvexen und einer konkaven Seite überführt und mit der konvexen Seite voran mit der Oberfläche des Bauteils kontaktiert, so dass die Klebeschicht der Klebefolie von der elastischen Membran vollflächig an die Oberfläche des Bauteils gepresst wird, und
f. das vollflächige Pressen der Klebeschicht der Klebefolie an die Oberfläche des Bauteils wird bewirkt, indem die der Klebefolie zugewandte Seite der elastischen Membran mit einem Unterdruck beaufschlagt wird, und
g. zur Stabilisierung des Bauteils gegen eine durch diesen Unterdruck bewirkte Verformung die elastische Membran mitsamt der Klebefolie mit Hilfe eines Stempelmittels gegen die Oberfläche des Bauteils gedrückt wird.

Besonders wichtig für das Verfahren ist der Einsatz der Membran. Diese ist bevorzugt als Schicht aus einem elastischen Material ausgebildet und umfasst zwei sich gegenüberliegende Flachseiten. Zum Drücken der elastischen Membran gegen die Oberfläche des Bauteils ist das Stempelmittel bevorzugt derart positioniert, dass es einen Druck auf die der Klebefolie abgewandte Seite der Membran ausüben kann.

Besonders bevorzugt wird die elastische Membran zur Stabilisierung des Bauteils gegen die durch den Unterdruck bewirkte Verformung mitsamt der Klebefolie mit Hilfe des Stempelmittels gegen die Oberfläche des Bauteils gedrückt, so dass die Klebeschicht der Klebefolie in einem punktförmigen Kontaktbereich an die Oberfläche gepresst wird. Dieser ergibt sich aus der Wölbung der Membran, die bereits aus einem Drücken des Stempelmittels gegen die der Klebefolie abgewandte Seite der Membran resultiert. Weiterhin resultiert sie auch aus dem Anlegen des Unterdrucks. Der Unterdruck und das Stempelmittel können die Wölbung unabhängig voneinander und gemeinsam herbeiführen.

In jedem Fall drückt zunächst der höchste Punkt der Wölbung die Klebefolie in dem punktförmigen Kontaktbereich an die Oberfläche. Bei einer Erhöhung des Unterdrucks werden auch andere Bereiche der Membran gegen die Oberfläche gezogen. Der Kontaktbereich breitet sich dann radial aus, bis die Klebeschicht die Oberfläche vollflächig kontaktiert.

Insbesondere ist das Stempelmittel relativ zur Membran derart positioniert, dass sich die Membran in Folge des Drucks des Stempelmittels in Richtung des Bauteils wölbt und ein Kontakt der Oberfläche mit der Membran bzw. mit der zwischen der Membran und der Oberfläche positionierten Klebefolie dort erfolgt, wo die Membran bzw. die Klebefolie auch ohne das Stempelmittel, also nur gezogen durch den Unterdruck, zuerst in Kontakt mit der Oberfläche treten würde.

Bevorzugt werden die Membran und die Klebefolie bei dem Verfahren derart über der zu beklebenden Oberfläche positioniert, dass der initiale Kontaktbereich in einem zentralen Bereich der Klebefolie und der zu beklebenden Oberfläche gebildet wird, so dass sich der Kontaktbereich von da aus in Richtung der Ränder der Klebefolie ausbreitet. Hierdurch wird die Gefahr von Lufteinschlüssen minimiert.

Bei einer herkömmlichen manuellen Applikation einer Klebefolie ist ein solches Vorgehen kaum möglich. Um eine korrekte Positionierung der Klebefolie auf der Oberfläche bei einer manuellen Applikation zu gewährleisten, muss manuell stets zuerst ein Rand eine Klebefolie ausgerichtet und angedrückt werden.

Zur Einstellung des Unterdrucks wird eine Druckdifferenz zwischen den beiden Flachseiten der Membran eingestellt, bevorzugt indem die der Klebefolie zugewandte Seite der elastischen Membran mit einem geringeren Druck beaufschlagt wird als die der Klebefolie abgewandte Seite. In der Folge wird die elastische Membran in Richtung des Bauteils je nach Sichtweise gezogen oder gedrückt, so dass es zu dem Anpressen der Klebefolie an die Oberfläche des Bauteils kommen kann.

Wie eingangs erwähnt, kann das Anlegen des Unterdrucks bei druckempfindlichen Bauteilen, beispielsweise bei dünnen Blechen, eine unerwünschte Verformung der Bauteile bewirken. Dieses Problem wird bei dem erfindungsgemäßen Verfahren durch den Einsatz des Stempelmittels gelöst, das während dieses Prozesses gegen die Oberfläche des Bauteils drückt und das Bauteil damit gegen eine Verformung in Richtung der Membran und der Klebefolie, insbesondere eine gegen die Klebefolie gerichtete Wölbung, schützt. Eine derartige Wölbung würde zum einen das gleichmäßige Aufbringen der Klebefolie auf das Bauteil erschweren, insbesondere, wenn diese Wölbung schlagartig auftritt. Zum anderen könnte eine derartige Wölbung in einer dauerhaften Verformung des Bauteils resultieren, was selbstverständlich ebenfalls nicht gewünscht ist. Diese Probleme können bei einem Einsatz des Stempelmittels zur Stabilisierung des Bauteils nicht auftreten, so dass sich das beschriebene Verfahren mit besonderem Vorteil für das Aufbringen von Klebefolien auf strukturell schwache und/oder sehr flexible Bauteile eignet.

Die Druckdifferenz kann auf verschiedene Weise ausgebildet werden. Beispielsweise kann in dem Bereich zwischen der elastischen Membran und der Oberfläche des Bauteils Atmosphärendruck (1 bar) und auf der anderen Seite der elastischen Membran ein Druck höher als Atmosphärendruck eingestellt werden.

In einer besonders bevorzugten Ausgestaltung des erfindungsgemäßen Verfahrens ist zur Einstellung der Druckdifferenz mindestens eines der unmittelbar folgenden zusätzlichen Merkmale a. bis c. vorgesehen:
a. Der Unterdruck, mit dem der Klebefolie zugewandte Seite der elastischen Membran beaufschlagt wird, besteht relativ zu einem Druck, mit dem die der Klebefolie abgewandte Seite der elastischen Membran beaufschlagt wird und/oder einem Druck, mit dem eine Rückseite des Bauteils beaufschlagt wird.
b. Der Unterdruck ist ein Druck < 1 bar.
c. Zur Einstellung des Unterdrucks werden eine Unterdruckkammer, die von der der Klebefolie zugewandten Seite der Membran begrenzt wird, und eine Druckausgleichskammer, die von der der Klebefolie abgewandten Seite der Membran begrenzt wird, evakuiert, worauf die Druckausgleichskammer belüftet wird.

Vorzugsweise sind die unmittelbar vorgenannten Merkmale a. und b. und c. in Kombination realisiert.

In diesen bevorzugten und vorteilhaften Ausführungsformen des Verfahrens wird als Unterdruck ein Druck < Atmosphärendruck eingestellt, wobei auf der anderen Seite der Membran relativ dazu ein höherer Druck, beispielsweise Atmosphärendruck, herrscht. Vorzugsweise liegt der Unterdruck in einem Bereich zwischen 0,01 mbar und 1 bar, besonders bevorzugt zwischen 0,01 mbar und 750 mbar.

Je nach Größe des Bauteils und der zu beklebenden Fläche können ein oder mehrere Stempelmittel vorgesehen sein. Wenn ein einziges Stempelmittel vorgesehen ist, ist dieses Stempelmittel vorzugsweise derart angeordnet, dass es die Membran samt der Klebefolie gegen einen zentralen Bereich der zu beklebenden Fläche drückt. Bei mehreren Stempelmitteln sind mehrere Andruckpunkte verteilt über die zu beklebende Oberfläche vorgesehen.

Das Stempelmittel umfasst bevorzugt zumindest einen ausfahrbaren Kolben, der mit einem Stempelkopf ausgestattet ist, beispielsweise mit einem abgerundeten Stempelkopf. Ein abgerundeter Stempelkopf ist besonders vorteilhaft, da damit keine Abdrücke oder ähnliches auf der Oberfläche des Bauteils erzeugt werden. Das Ausfahren des Kolbens kann insbesondere mit einem betätigbaren Zylinder erfolgen. In einigen Ausführungsformen ist der Stempelkopf selbst elastisch ausgebildet oder mit einem elastischen Material überzogen.

In Bezug auf das Ausfahren des mindestens einen Stempelmittels, also in Bezug auf den Vorschub des Stempelmittels, ist das erfindungsgemäße Verfahren in besonders bevorzugter Weise durch das unmittelbar folgende Merkmal a. gekennzeichnet:
a. Ein Vorschub des Stempelkopfes erfolgt in Koordination mit der Einstellung des Unterdrucks.

Mit anderen Worten, es werden in bevorzugter Weise die Einstellung der Druckdifferenz, die zur einer Auslenkung der elastischen Membran führt, und der Vorschub des Stempelmittels, aufeinander abgestimmt.

Im Zusammenhang mit der Koordination des Einstellens der Druckdifferenz und dem Ausfahren des oder der Stempelmittel ist in bevorzugter Weise mindestens eines der unmittelbar folgenden Merkmale a. und b. vorgesehen:
a. Die Koordination des Vorschubs des Stempelkopfes mit der Einstellung des Unterdrucks erfolgt durch zeitliche Abstimmung.
b. Die Koordination des Vorschubs des Stempelkopfes mit der Einstellung des Unterdrucks erfolgt in Abhängigkeit von dem sich tatsächlich einstellenden Unterdruck.

In besonders bevorzugter Weise erfolgt das Andrücken des Stempelmittels in gesteuerter oder geregelter Form. Die Betätigung des Stempelmittels wird dabei insbesondere so ausgelegt, dass die in Folge der Druckdifferenz bei dem Prozess der Aufbringung der Folie auf das Bauteil wirkende Kraft kompensiert wird und es also zu einem Kräfteausgleich kommt.

Es ist besonders bevorzugt, dass der Vorschub des Stempelmittels und das Einstellen der Druckdifferenz, insbesondere das Einstellen eines Unterdrucks, zeitlich parallel erfolgt. Hierbei wird zweckmäßigerweise berücksichtigt, dass bei druckempfindlichen Bauteilen gleich zu Beginn der Evakuierung eine Verformung einsetzen kann, so dass vorteilhafterweise gleich zu Beginn der Evakuierung das Stempelmittel bis zum Kontakt mit dem Bauteil ausgefahren wird.

Es kann vorgesehen sein, dass das Ausfahren des Stempelmittels zeitabhängig erfolgt. Beispielsweise kann nach Ablauf von einigen Sekunden oder eines vorgebbaren Zeitintervalls, z. B. 2 s oder 3 s oder 4 s oder 5 s nach dem Start einer Evakuierung das Stempelmittel ausgefahren werden.

In anderen Ausgestaltungen kann das Ausfahren des Stempelmittels in Abhängigkeit von einem tatsächlichen gemessenen, auf die Membran wirkenden Druck erfolgen, also insbesondere bei Unterschreiten einer vorgebbaren Druckschwelle beim Einstellen des Unterdrucks. In dieser Ausführungsform können mit Vorteil ein oder mehrere Drucksensoren eingesetzt werden. So kann beispielsweise bei einem erreichten Druck von 100 mbar oder einer anderen Druckschwelle das Stempelmittel ausgefahren werden. Eine derartige Regelung kann insbesondere auch auf das zu beklebenden Bauteil abgestimmt werden, insbesondere in Abhängigkeit von der Druckempfindlichkeit des jeweiligen variiert werden.

Eine besonders bevorzugte Ausführungsform des erfindungsgemäßen Verfahrens zeichnet sich durch die unmittelbar folgenden zusätzlichen Schritte a. bis d. aus:
a. Die elastische Membran wird in einem ersten Schritt von dem automatisierten System an die Oberfläche des Bauteils herangeführt, und
b. im Bereich zwischen der zu beklebenden Oberfläche des Bauteils und der elastischen Membran wird in einem zweiten Schritt der Unterdruck angelegt, und
c. in einem dritten Schritt wird die elastische Membran mitsamt der Klebefolie mit Hilfe des Stempelmittels gegen die Oberfläche des Bauteils gedrückt, und
d. der Unterdrucks wird verstärkt, bis die Klebeschicht der Klebefolie von der Membran vollflächig an die Oberfläche gepresst wird.

Grundsätzlich ist in dieser Ausführungsform eine zeitliche Überlappung des Schritts a. mit den übrigen Schritten nicht möglich. Die Schritte b. und c. und d. können grundsätzlich überlappen. In einigen bevorzugten Ausführungsformen ist allerdings Schritt c. vor Schritt b. und Schritt d. abgeschlossen.

Die Begriffe "Heranführen" und "herangeführt" im Kontext des unmittelbar vorstehenden Schritts a. sollen erfindungsgemäß sehr weit ausgelegt werden. Zum Heranführen der Membran an die Oberfläche kann natürlich im einfachsten Fall die Membran auf die Oberfläche zubewegt werden, allerdings kann durchaus umgekehrt auch die Oberfläche selbst auf die Membran zubewegt werden. Von Interesse ist beim Heranführen allein der Abstand der Oberfläche und der Membran zueinander. Ob zu r Verringerung des Abstands die Membran oder die Oberfläche oder beide bewegt werden ist nicht entscheidend.

Ein zwischen der zu beklebenden Oberfläche und der elastischen Membran angelegter Unterdruck kann, wie oben schon angedeutet, in bevorzugten Ausführungsformen zur Kompensation eines Anpressdrucks variiert werden. Entsprechend zeichnet sich das beanspruchte Verfahren in bevorzugten Ausführungsformen durch das unmittelbar folgende Merkmal a. aus:
a. Der Unterdruck wird in Abhängigkeit des Drucks, den die Membran über die Klebefolie auf die zu beklebende Oberfläche ausübt, variiert.

Hierzu kann ein automatisierter Steuerungs- oder Regelmechanismus vorgesehen sein, der in Abhängigkeit des gewünschten Anpressdrucks den Unterdruck automatisch anpasst. Die tatsächlichen Drücke können dabei in bevorzugten Ausführungsformen von Sensoren erfasst werden.

In einer weiteren bevorzugten Weiterbildung der Erfindung zeichnet sich das beanspruchte Verfahren durch mindestens einen der unmittelbar folgenden Schritte a. und b. aus:
a. die Membran wird durch einen Überdruck oder mit Hilfe eines Überdrucks in den gewölbten Zustand überführt,
b. die Membran wird vor dem Anpressen der Klebefolie erwärmt oder gekühlt.

Mit dem Überdruck kann alternativ zu dem oben beschriebenen Unterdruck gearbeitet werden. Verfahrenswesentlich ist, dass die erwähnte Wölbung entsteht und es ist von sekundärer Bedeutung, ob die Bildung der Wölbung durch einen Unterdruck oder einen Überdruck unterstützt oder herbeigeführt wird.

Das Erwärmen der Membran kann völlig unabhängig vom Einsatz von Unter- und Überdruck vorgenommen werden. Durch Erwärmung oder Kühlung der Membran kann beispielsweise Schrumpfungs- oder Streckungseffekten entgegengewirkt werden.

In einer weiteren bevorzugten Weiterbildung der Erfindung zeichnet sich die in dem Verfahren eingesetzte elastische Membran durch mindestens eines der unmittelbar folgenden Merkmale a. bis c. aus:
a. Die elastische Membran besteht aus einem elastischen Polymermaterial, insbesondere aus Naturkautschuk oder Silikon.
b. Die elastische Membran weist eine gleichmäßige Dicke auf.
c. Die elastische Membran weist Schwächungs- und oder Verstärkungsbereiche zur gezielten Beeinflussung der Geometrie des gewölbten Zustands auf.

Besonders bevorzugt sind entweder die unmittelbar vorstehenden Merkmale a. und c. oder b. und c. in Kombination miteinander realisiert.

Eine Beeinflussung der Geometrie des gewölbten Zustands der Membran kann bei Bildung des oben erwähnten punktförmigen Kontaktbereichs hilfreich sein. Wenn etwa eine Vertiefung in der zu beklebenden Oberfläche vorliegt, sollte der punktförmige Kontaktbereich idealerweise am tiefsten Punkt der Vertiefung entstehen. Es kann bevorzugt sein, die Bildung eines kreisförmigen Kontaktbereichs zu vermeiden, da ansonsten Lufteinschlüsse auftreten können.

Ist die elastische Membran beispielsweise in einem Bereich dünner ausgebildet als in einem anderen Bereich, so wird sie sich in diesem Bereich beim Anlegen eines Drucks oder Unterdrucks leichter und weiter wölben als in den übrigen Bereichen. Das Umgekehrte gilt im Falle einer Verstärkung der elastischen Membran.

Die Einführung von Schwächungs- und oderVerstärkungsbereichen in die elastische Membran kann weiterhin zweckmäßig sein, um die Ausdehnung des Kontaktbereichs zu beeinflussen. Insbesondere beim Aufkleben der Klebefolie auf gebogene Oberflächen, insbesondere auf Oberflächen mit Vertiefungen, kann dies vorteilhaft sein.

In einer besonders bevorzugten Weiterbildung der Erfindung zeichnet sich das beanspruchte Verfahren durch mindestens einen der unmittelbar folgenden Schritte a. bis c. aus:
a. Das Positionieren der Klebefolie zwischen der Oberfläche und der elastischen Membran erfolgt mit Hilfe einer Montagefolie, an der die Klebefolie mit ihrer der Klebeschicht abgewandten Seite haftet.
b. Zum Positionieren der Klebefolie wird die Montagefolie an oder in einem Rahmen fixiert.
c. Nach dem Anpressen der Klebefolie an die Oberfläche wird die Montagefolie von der Klebefolie abgezogen.

Besonders bevorzugt sind zumindest die unmittelbar vorstehenden Schritte a. und c. in Kombination miteinander realisiert, besonders bevorzugt alle Schritte a. bis c..

Da die Klebefolie in der Regel einschließlich ihrer Ränder an die zu beklebende Oberfläche gepresst werden soll, erleichtert die Montagefolie ihre Positionierung. Nach dem Anpressen der Klebefolie wird die Montagefolie vorzugsweise von der Klebefolie abgezogen.

Die Montagefolie ist bevorzugt dazu ausgebildet, an dem Rahmen fixiert zu werden. Hierzu kann sie Positionierungs- und Fixiermittel aufweisen, die das Fixieren am Rahmen erleichtern.

Bei der Klebefolie handelt es sich beispielsweise um ein Dekor, einen Schriftzug oder um einen oder mehrere einzelne Buchstaben oder Dekorelemente, die auf die zu beklebende Oberfläche aufgebracht werden sollen.

Es ist möglich, zeitgleich mehrere an der Montagefolie haftende Klebefolien auf die zu beklebende Oberfläche zu transferieren, beispielsweise wenn ein Schriftzug umfassend mehrere Buchstaben oder Wörter auf die Oberfläche übertragen werden soll. In diesem Fall ist es bevorzugt, die Membran und die Klebefolie derart über der zu beklebenden Oberfläche zu positionieren, dass der initiale Kontaktbereich in einem zentralen Bereich des aus mehreren Klebefolien gebildeten Schriftzugs gebildet wird.

Ein besonderer Vorteil des erfindungsgemäßen Verfahrens ist, dass das Verfahren einer Automatisierung zugänglich ist. In besonders bevorzugter Weise wird das Verfahren daher mit Hilfe eines automatisierten Systems durchgeführt. Insbesondere in dieser Ausführungsform kann es beispielsweise in der Kraftfahrzeugproduktion mit besonderem Vorteil zum Einsatz kommen kann. In diesem Fall handelt es sich bei dem zu beklebenden Bauteil bevorzugt um eine Kraftfahrzeugkarosserie oder um ein Teil einer Kraftfahrzeugkarosserie oder um ein Anbauteil eines Kraftfahrzeugs. In dieser Ausführungsform umfasst das Verfahren bevorzugt zwei oder mehr, insbesondere alle der unmittelbar folgenden Schritte a. bis d.:
a. Beschichtung einer Kraftfahrzeugkarosserie oder von Teilen einer Kraftfahrzeugkarosserie mit mindestens einem Lack.
b. Trocknen und/oder Aushärten des mindestens einen Lacks.
c. Gegebenenfalls Montage von Anbauteilen an tragende Komponenten der mit dem getrockneten und/oder ausgehärteten mindestens einen Lack beschichteten Kraftfahrzeugkarosserie.
d. Aufbringen der Klebefolie, die eine Klebeschicht umfasst, auf eine Oberfläche der mit dem getrockneten und/oder ausgehärteten mindestens einen Lack beschichteten Kraftfahrzeugkarosserie oder Teilen der Kraftfahrzeugkarosserie oder eines der daran montierten Anbauteile.

Das Aufbringen der Klebefolie gemäß dem vorgenannten Merkmal d. erfolgt in der oben beschriebenen Weise, wobei mindestens ein Stempelmittel genutzt wird, um die Form des Bauteils während der Aufbringung der Klebefolie zu stabilisieren und eine Verformung zu vermeiden.

Bei dem mindestens einen Lack handelt es sich bevorzugt um einen üblichen mehrlagigen Automobillack. Karosserien und Karosserieteile werden in aller Regel grundiert, mit einem Basislack lackiert und abschließend mit einem Klarlacküberzug versehen. Die hierfür erforderlichen Arbeits- und Zwischenschritte sind bekannt. Für die vorliegende Erfindung ist lediglich wichtig, dass der mindestens eine Lack auf dem zu beklebenden Substrat getrocknet und ausgehärtet ist, also eine druckfeste Oberfläche bietet und kein Lösungsmittel mehr enthält. Ein Klarlackauftrag ist nach dem Aufbringen der Klebefolie gemäß der Erfindung in der Regel nicht erforderlich bzw. nicht vorgesehen.

Der Begriff "Anbauteil" ist im Kontext der Erfindung weit auszulegen. Hiervon sind zum einen nicht lackierte Teile wie Scheiben oder Scheinwerfer umfasst, zum anderen aber auch lackierte Teile wie eine Motorhaube, eine Tür, ein Kotflügel und ein Dachelement oder gefärbte Kunststoffteile. Gegebenenfalls wurde auf diese Anbauteile separat von der Kraftfahrzeugkarosserie ein Lack aufgebracht und getrocknet und/oder ausgehärtet.

In einer bevorzugten Weiterbildung der Erfindung zeichnet sich die in dem Verfahren einsetzbare Klebefolie durch mindestens eines der unmittelbar folgenden Merkmale a. bis h. aus:
a. Die Klebefolie umfasst eine Trägerfolie, die auf einer Seite die Klebeschicht und auf einer anderen Seite eine Lackschicht aufweist.
b. Die Trägerfolie ist eine Kunststofffolie, eine Metallfolie oder eine Metall-Kunststoff-Kompositfolie.
c. Die Trägerfolie weist eine Dicke im Bereich von 10 µm bis 120 µm auf.
d. Die Klebeschicht weist eine Dicke im Bereich von 10 µm bis 80 µm, bevorzugt von 30 µm bis 60 µm, auf.
e. Die Klebeschicht weist eine gleichmäßige Dicke auf.
f. Die Klebeschicht besteht aus einer homogenen Klebemasse.
g. Die Klebeschicht weist eine Fläche im Bereich von 10 cm² bis 8 m² auf.
h. Die Lackschicht weist eine Dicke im Bereich von 20 µm bis 150 µm, bevorzugt von 30 µm bis 90 µm, besonders bevorzugt von 40 µm bis 60 µm, auf.

Besonders bevorzugt sind zumindest die unmittelbar vorstehenden Merkmale a. und b. und g. in Kombination miteinander realisiert. In einer bevorzugten Weiterbildung sind die Merkmale a. bis d. und g. und h., insbesondere a. bis e. und g. und h., in einer besonders bevorzugten Ausführungsform alle Merkmale a. bis h., in Kombination miteinander realisiert.

Das Merkmal e. ist besonders bevorzugt in Kombination mit dem Merkmal f. realisiert. Unter einer gleichmäßigen Dicke ist zu verstehen, dass die Klebeschicht nicht lokal durch Mikrostrukturkanäle zum Abführen von Luft oder sonstige Mikrostrukturen geschwächt ist. Bevorzugt ist sie durch Auftrag einer homogenen Klebermasse mittels eines Rakels gebildet und weist entsprechend eine im Wesentlichen ebene und gleichmäßige Oberfläche auf. Unter "homogen" wird verstanden, dass die Klebermasse keine Partikel, insbesondere sichtbare Partikel, enthält.

Der Einsatz mikrostrukturfreier Klebeschichten ermöglicht, dass in dem erfindungsgemäßen Verfahren Klebefolien mit sehr dünnen Trägern verwendet werden und dabei trotzdem hochglänzende "Class A-Oberfläche" erhalten werden können. Innerhalb des oben angegebenen Bereichs von 10 µm bis 120 µm sind Trägerfolien mit einer Dicke von 10 µm bis 60 µm, bevorzugt von 10 µm bis 40 µm, daher weiter bevorzugt, insbesondere wenn die Klebeschicht frei von den genannten Mikrostrukturen ist.

Die Erfindung umfasst weiterhin ein Werkzeug zum Aufbringen einer Klebefolie auf eine Oberfläche eines Bauteils. Insbesondere eignet sich dieses Werkzeug für die Durchführung des beschriebenen Verfahrens. Das Werkzeug zeichnet sich stets durch die folgenden Merkmale aus:
a. Es umfasst eine elastische Membran, insbesondere in einer der oben beschriebenen Ausführungsformen, zum vollflächigen Anpressen der Klebefolie auf die Oberfläche des Bauteils, und
b. es umfasst mindestens ein Mittel zur Positionierung der Klebefolie zwischen der Oberfläche des Bauteils und der elastischen Membran, und
c. es umfasst ein Mittel zur Erzeugung eines Unterdrucks auf der der Klebefolie zugewandten Seite der elastischen Membran und/oder ein Mittel zur Erzeugung eines Unterdrucks auf der der Klebefolie abgewandten Seite der elastischen Membran, und
d. es umfasst mindestens ein Stempelmittel zum Drücken der elastischen Membran mitsamt der Klebefolie gegen die Oberfläche des Bauteils zur Stabilisierung des Bauteils während des Aufbringens der Klebefolie.

Das erfindungsgemäße Werkzeug kann insbesondere zum Aufbringen der oben beschriebenen Klebefolie auf die gleichfalls oben beschriebene lackierte Oberfläche einer Kraftfahrzeugkarosserie oder eines daran montierten Anbauteils genutzt werden.

In einer besonders bevorzugten Ausgestaltung weist das erfindungsgemäße Werkzeug das folgende zusätzliche Merkmal auf:
a. Es umfasst einen Rahmen, der dazu ausgebildet ist, gemeinsam mit derzu beklebenden Oberfläche und der elastischen Membran eine Unterdruckkammer zu bilden, in der die Klebefolie angeordnet ist und in welche die elastische Membran sich beim Beaufschlagen der Unterdruckkammer mit einem Unterdruck wölben kann.

Wie bereits beschrieben, ist es besonders vorteilhaft, beim Aufbringen der Klebefolie im Bereich zwischen der zu beklebenden Oberfläche und der elastischen Membran einen Unterdruck anzulegen. Hierzu ist der Rahmen vorgesehen.

Die elastische Membran kann zu Temperierzwecken doppelwandig ausgebildet sein und Anschlüsse für ein Temperiermittel wie beispielsweise Wasser aufweisen.

In einigen besonders bevorzugten Ausführungsformen weist die Membran die oben beschriebenen Schwächungs- und/oder Stärkungsbereiche auf.

Da die Klebefolie bevorzugt an der oben beschriebenen Montagefolie haftet, ist das Mittel zur Fixierung der Klebefolie entsprechend bevorzugt ein Mittel zur Fixierung der Montagefolie.

Bei den Mitteln zur Fixierung der Klebefolie oder der Montagefolie kann es sich beispielsweise um Stifte oder Haken handeln, die zu Löchern in der Klebe- oder der Montagefolie korrespondieren.

In einer bevorzugten Weiterbildung der Erfindung zeichnet sich das Werkzeug durch mindestens eines der unmittelbar folgenden Merkmale a. bis f. aus:
a. Der Rahmen ist rechteckig ausgebildet.
b. Der Rahmen weist eine erste Öffnung auf, die von der Membran verschlossen ist.
c. Der Rahmen umfasst mindestens ein elastisches Dichtelement, das dichtend auf der Oberfläche aufliegen kann.
d. Der Rahmen umfasst eine zweite Öffnung, an deren Rändern das mindestens eine elastische Dichtelement fixiert ist.
e. Der Rahmen umfasst mindestens einen Anschluss für eine Unterdruckquelle, über den die Unterdruckkammer mit Unterdruck beaufschlagt werden kann.
f. Der Rahmen umfasst als Mittel zur Fixierung der Klebefolie mindestens eine Halterung.

Bevorzugt sind zumindest die unmittelbar vorstehenden Merkmale a. bis e. in Kombination miteinander realisiert, besonders bevorzugt alle Merkmale a. bis f..

Das mindestens eine Dichtelement dient zum Abdichten der Unterdruckkammer. Sie bestehen bevorzugt aus elastischen Polymermaterialien, beispielsweise aus dem bereits erwähnten Naturkautschuk. Der mindestens eine Anschluss für die Unterdruckquelle dient zur Erzeugung des Unterdrucks in der Unterdruckkammer.

In einer weiteren bevorzugten Weiterbildung der Erfindung zeichnet sich das Werkzeug durch mindestens eines der unmittelbar folgenden Merkmale a. bis d. aus:
a. Der Rahmen ist aus zwei oder mehr Teilrahmen zusammengesetzt.
b. Der Rahmen ist rechteckig ausgebildet und aus den zwei oder mehr rechteckigen Teilrahmen zusammengesetzt.
c. Der Rahmen umfassteinen ersten rechteckigen Teilrahmen, an dem das mindestens eine elastische Dichtelement fixiert ist und der den mindestens einen Anschluss für die Unterdruckquelle umfasst.
d. Der Rahmen umfasst einen zweiten rechteckigen Teilrahmen, der die mindestens eine Halterung für die Klebefolie umfasst.

Bevorzugt sind zumindest die unmittelbar vorstehenden Merkmale a. bis c. in Kombination miteinander realisiert, besonders bevorzugt alle Merkmale a. bis d..

Beim Einsatz von zwei oder mehrTeilrahmen kann es erforderlich sein, an Verbindungsflächen der Teilrahmen weitere Dichtungselemente vorzusehen, um die Dichtigkeit der Unterdruckkammer zu gewährleisten.

Zum Zwecke der oben beschriebenen Steuerung oder Regelung des Unterdrucks kann das Werkzeug eine geeignete Steuerungs- oder Regeleinrichtung aufweisen.

In einer weiteren bevorzugten Weiterbildung der Erfindung zeichnet sich das Werkzeug durch mindestens eines der unmittelbar folgenden Merkmale a. bis c., bevorzugt durch eine Kombination der unmittelbar folgenden Merkmale a. und b. oder a. und c., aus:
a. Es umfasst eine Druckausgleichskammer, die unter anderem von der Membran begrenzt wird.
b. Es umfasst mindestens einen Anschluss für eine Druck- oder eine Unterdruckquelle, der in die Druckausgleichskammer führt.
c. Es umfasst mindestens ein Ventil, über das die Druckausgleichskammer belüftet werden kann.

Diese Druckausgleichskammer wird gegebenenfalls benötigt, um die beschriebene Wölbung der elastischen Membran zu erzeugen oder zu verstärken. Wenn ein Unterdruck in der Unterdruckkammer angelegt ist, kann es hierzu völlig ausreichend sein, die Druckausgleichskammer über das Ventil zu belüften um die geforderte Wölbung der Membran zu bewirken oder zu verstärken.

Besonders bevorzugt ist das Werkzeug an einem automatisierten System fixiert, beispielsweise dem Arm eines Roboters. Das Werkzeug, bevorzugt einschließlich des automatisierten Systems, ist bevorzugt in einer Fertigungsstraße zur Produktion von Kraftfahrzeugen angeordnet.

Grundsätzlich eignen sich das beschriebene Verfahren und das beschriebene Werkzeug natürlich nicht nur zum Einsatz in der Produktion von Kraftfahrzeugen. Beispielsweise auch andere Serienprodukte können erfindungsgemäß mit Klebefolien versehen werden, beispielsweise Fahrräder.

Weitere Merkmale und Vorteile der beschriebenen Erfindung ergeben sich aus den nachfolgend beschriebenen Zeichnungen, in denen bevorzugte Ausführungsformen des erfindungsgemäßen Werkzeugs in verschiedenen Stadien des erfindungsgemäßen Verfahrens dargestellt sind. Die dargestellten und beschriebenen Ausführungsformen dienen lediglich zur Erläuterung und zum besseren Verständnis der Erfindung und sind in keiner Weise einschränkend zu verstehen.

### KURZBESCHREIBUNG DER ZEICHNUNGEN

In den Figuren zeigen zur Veranschaulichung des erfindungsgemäßen Verfahrens und des erfindungsgemäßen Werkzeugs, jeweils schematisch
- Fig. 1: eine Schnittdarstellung durch ein erfindungsgemäßes Werkzeug vor oder zu Beginn der Durchführung des erfindungsmäßen Verfahrens; und
- Fig. 2: eine Schnittdarstellung durch ein erfindungsgemäßes Werkzeug während der Durchführung des erfindungsmäßen Verfahrens.

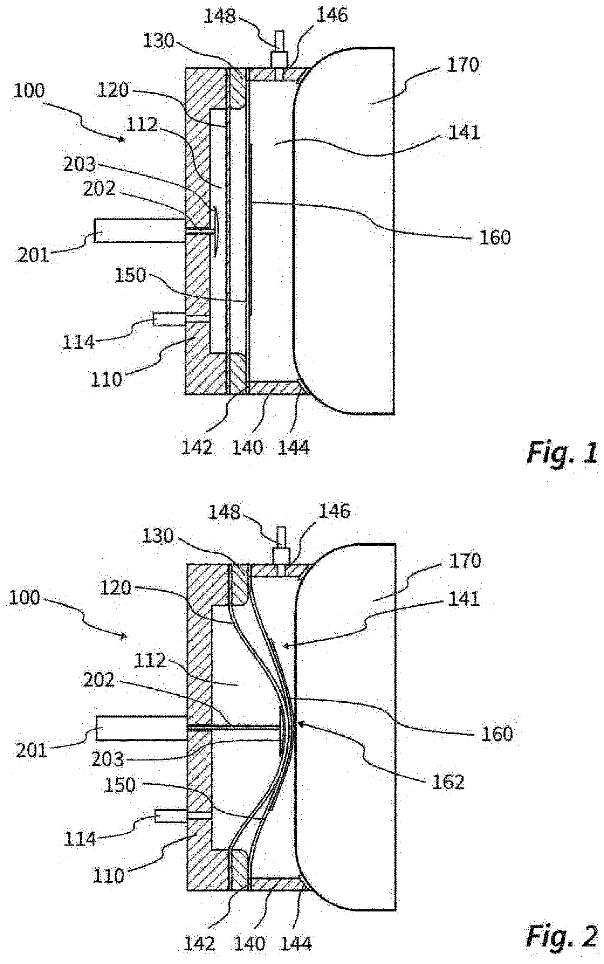

Die Figuren 1 und 2 zeigen im Querschnitt ein erfindungsgemäßes Werkzeug 100, das zum Aufbringen einer Klebefolie 160 auf die Oberfläche eines Bauteils 170, beispielsweise auf eine lackierte Oberfläche eines Kraftfahrzeugs, vorgesehen ist.

Das Werkzeug 100 umfassteinen rechteckigen Rahmen, dersich aus einem rechteckigen Teilrahmen 130 und einem rechteckigen Teilrahmen 140 (Unterdruckrahmen) zusammensetzt. Die Teilrahmen 130 und 140 sind luftdicht über eine Dichtung 142 verbunden. An dem Teilrahmen 130 ist mittels mehrerer hier nicht sichtbarer Stifte oder ähnlicher Fixierungsmittel eine Montagefolie 150 fixiert. Hierfür kann die Montagefolie 150 mehrere Löcher aufweisen, über die eine Aufhängung an den Stiften oder allgemein an entsprechenden Fixierungsmitteln vorgenommen werden kann.

Parallel zu der Montagefolie 150 ist eine elastische Membran 120 beispielsweise aus Naturkautschuk angeordnet. Sie ist zwischen einer Basisplatte 110 und dem Teilrahmen 130 luftdicht eingespannt. Sie verschließt die durch den Teilrahmen 130 definierte Öffnung des Rahmens. Für das Einspannen können beispielsweise mehrere hier nicht sichtbare Schrauben oder andere Fixierungsmittel durch den Teilrahmen 130 in die Basisplatte 110 geschraubt sein.

Die Basisplatte 110 schließt mit der Membran 120 eine Druckausgleichskammer 112 ein. Über ein Ventil 114 kann Luft in die Druckausgleichskammer 112 eingelassen werden.

Auf der der elastischen Membran 120 abgewandten Seite der Basisplatte 110 kann eine Unterkonstruktion angebracht werden, über welche ein Anschluss des Werkzeugs 100 an ein Hubwerkzeug oder einen Roboter vorgesehen sein kann.

Auf der Seite der Montagefolie 150, die der Oberfläche des Bauteils 170 zugewandt ist, haftet die Klebefolie 160, die auf die Oberfläche 170 des Bauteils übertragen werden soll. Die Klebefolie 160 weist auf der Seite, die der Oberfläche des Bauteils 170 zugewandt ist, eine Klebeschicht auf. Insbesondere kann die Klebefolie von einer Trägerfolie und einer darauf angebrachten ein- oder mehrlagigen Lackschicht sowie der Klebeschicht, die auf der der Lackschicht abgewandten Seite angeordnet ist, gebildet sein. Bei der Klebefolie 160 kann es sich um ein Folienteil oder auch um mehrere Folienteile handeln, beispielsweise einzelne Buchstaben oder Ornamente oder ähnliches, die gemeinsam auf die Oberfläche des Bauteils 170 aufgebracht werden sollen.

Der aus den Teilrahmen 130 und 140 bestehende Rahmen ist dazu ausgebildet, gemeinsam mit der zu beklebenden Oberfläche des Bauteil 170 und der elastischen Membran 120 eine Unterdruckkammer 141 zu bilden, in der sich die Montagefolie 150 einschließlich der Klebefolie 160 befindet und in welche sich die elastische Membran 120 wölben kann, wenn die Unterdruckkammer 141 mit einem Unterdruck oder einem Vakuum beaufschlagt wird. Der Unterdruckrahmen 140 ist zu diesem Zweck an die Geometrie der Oberfläche des Bauteils 170 angepasst, so dass ein formschlüssiger Kontakt zwischen dem Bauteil 170 und dem Unterdruckrahmen 140 gewährleistet ist.

An den Rändern der durch den Teilrahmen 140 definierten Öffnung des Rahmens ist ein elastisches Dichtelement 144 fixiert, über das der Rahmen dichtend mit dem Bauteil 170 verbunden ist. Über einen mit einer Unterdruckquelle gekoppelten Anschluss 148 und den durch den Teilrahmen 140 geführten Kanal 146 kann die Unterdruckkammer 141 evakuiert werden.

Das Werkzeug 100 umfasst gemäß der Erfindung weiterhin ein Stempelmittel 200, das von einem Zylinder 201, einem ausfahrbaren Kolben 202 und einem Stempelkopf 203 gebildet ist.

Fig. 1 repräsentiert den Zustand des Werkzeugs 100 mit der darin enthaltenen Klebefolie 160 im Ausgangszustand zu Beginn der Durchführung des Verfahrens. In diesem Zustand ist der Druck zwischen der Unterdruckkammer 141 und der Druckausgleichskammer 112 ausgeglichen. In beiden Kammern 141 und 112 herrscht der gleiche Druck, beispielsweise atmosphärischer Druck (Umgebungsdruck) oder ein Unterdruck von 100 mbar. Die elastische Membran 120 ist nicht ausgelenkt, also nicht gewölbt.

Fig. 2 repräsentiert den Zustand während der weiteren Durchführung des Verfahrens, bei der die elastische Membran 120 in Richtung des Bauteils 170 ausgelenkt ist. In diesem Zustand ist die elastische Membran 120 gewölbt. Ihre konvexe Seite presst die Montagefolie 150 und insbesondere die darauf haftende Klebefolie 160 gegen die Oberfläche des Bauteils 170. Die Auslenkung der elastischen Membran 120 wird durch den ausgefahrenen Stempel sowie eine Druckdifferenz zwischen der Unterdruckkammer 141 und der Druckausgleichskammer 112 bewirkt, wobei in der Unterdrucckammer 141 ein niedrigerer Druck als in der Druckausgleichskammer 112 herrscht.

Dieser Zustand der Druckdifferenz kann erreicht werden, indem in der Unterdruckkammer 141 der Druck erniedrigt wird. Dies kann durch Evakuierung der Unterdruckkammer 141 über den Anschluss 148 erfolgen. Wenn zugleich das Ventil 114, das zu Belüftung der Druckausgleichskammer 112 vorgesehen ist, geöffnet ist, wird durch den Unterdruck in der Unterdruckkammer 141 und den in der Druckausgleichskammer 112 herrschenden atmosphärischen Druck die elastische Membran 120 in Richtung der Oberfläche des Bauteils 170 in gewölbter Form ausgelenkt. Es kann in anderen Ausführungsformen auch vorgesehen sein, dass die Bereiche zu beiden Seiten der elastischen Membran 120, also sowohl die Unterdruckkammer 141 als auch die Druckausgleichskammer 121, zunächst evakuiert werden. In dieser Phase bewegt sich die elastische Membran 120 noch nicht, zumindest so lange auf beiden Seiten der gleiche Druck herrscht. Erst anschließend wird die Druckausgleichskammer 112 belüftet, so dass dann durch den Anstieg des Drucks in der Druckausgleichskammer 112 die elastische Membran 120 in Richtung des Bauteils 170 ausgelenkt wird, zumindest sofern die Membran durch einen entsprechenden Druck des Stempelmittels sich nicht ohnehin bereits in einem gewölbten Zustand befindet.

Durch die Wölbung der Membran 120 wird die Montagefolie 150 mit der Klebefolie 160 an die Oberfläche des Bauteils 170 gepresst. Es bildet sich in der Regel ein erster Kontaktbereich 162 zwischen der Klebefolie 160 und der Oberfläche des Bauteils 170, der sich in Folge eines stärker werdenden Unterdrucks radial ausbreitet. Restluft, welche sich gegebenenfalls noch zwischen der Klebefolie 160 und der Oberfläche des Bauteils 170 befindet, kann somit stets nach außen hin auf dem kürzesten Weg entweichen. Wenn sich der Kontaktbereich im weiteren Verlauf des Prozesses weiter ausbreitet, tritt die gesamte Fläche der Klebefolie 160 durch das vollflächige Anpressen mittels der elastischen Membran 120 mit der Oberfläche des Bauteils 170 in Kontakt und haftet in Folge der Klebeschicht zuverlässig an der Oberfläche des Bauteils 170 an.

Kern der Erfindung ist, dass vor oder parallel zu der Ausbildung einer Druckdifferenz zwischen der Unterdruckkammer 141 und der Druckausgleichskammer 112 der Kolben 202 des Stempelmittels 200 mit dem daran befindlichen Stempelkopf 203 ausfährt und die elastische Membran 120 punktuell gegen die Oberfläche des Bauteils 170 drückt, wobei zwischen der Membran 120 und dem Bauteil 170 die Klebefolie 160 liegt. Durch diese Maßnahme wird die Form des Bauteils 170 stabilisiert und es wird vermieden, dass sich das Bauteil 170, bei dem es sich beispielsweise um ein leicht verformbares, dünnes Blech handeln kann, durch den in der Unterdruckkammer 141 herrschenden Unterdruck verformt und in Richtung des Inneren des Werkzeugs 100 ausbeult oder wölbt.

Nachdem das Anpressen der Klebefolie 160 an die Oberfläche 170 abgeschlossen ist, können die Unterdruckkammer 141 und die Druckausgleichskammer 112 belüftet werden. Die Membran 120 kann dann wieder in den Ausgangszustand zurückkehren. Hierzu erfordert es auch eine Rückkehr des Stempelmittels 200 in den Ausgangszustand. In der Regel wird dann die Montagefolie 150 von der Klebefolie 160 abgezogen. Die Klebefolie 160 verbleibt auf der Oberfläche 170.

## Patentansprüche

1. Verfahren zum Aufbringen einer Klebefolie auf ein Bauteil, umfassend die Schritte
a. Bereitstellen eines Bauteils (170),
b. Bereitstellen einer Klebefolie (160), die eine Klebeschicht umfasst,
c. Aufbringen der Klebefolie auf eine Oberfläche des Bauteils (170),
wobei zum Aufbringen der Klebefolie (160) die folgenden Maßnahmen ergriffen werden:
d. Die Klebefolie (160) wird zwischen der Oberfläche des Bauteils (170) und einer elastischen Membran (120) positioniert,
e. die elastische Membran (120) wird zumindest bereichsweise in einen gewölbten Zustand mit einer konvexen und einer konkaven Seite überführt und mit der konvexen Seite voran mit der Oberfläche des Bauteils (170) kontaktiert, so dass die Klebeschicht der Klebefolie (160) von der elastischen Membran (120) vollflächig an die Oberfläche des Bauteils (170) gepresst wird,
f. das vollflächige Pressen der Klebeschicht der Klebefolie (160) an die Oberfläche des Bauteils (170) wird bewirkt, indem die der Klebefolie (160) zugewandte Seite der elastischen Membran (120) mit einem Unterdruck beaufschlagt wird, und
g. zur Stabilisierung des Bauteils (170) gegen eine durch diesen Unterdruck bewirkte Verformung die elastische Membran (120) mitsamt der Klebefolie (160) mit Hilfe eines Stempelmittels (200) gegen die Oberfläche des Bauteils (170) gedrückt wird.

2. Verfahren nach Anspruch 1, **gekennzeichnet durch** mindestens eines der folgenden Merkmale:
a. Der Unterdruck, mit dem der Klebefolie (160) zugewandte Seite der elastischen Membran (120) beaufschlagt wird, besteht relativ zu einem Druck, mit dem die der Klebefolie (160) abgewandte Seite der elastischen Membran (120) beaufschlagt wird und/oder einem Druck, mit dem eine Rückseite des Bauteils (170) beaufschlagt wird.
b. Der Unterdruck ist ein Druck < 1 bar.
c. Zur Einstellung des Unterdrucks werden eine Unterdruckkammer, die von der der Klebefolie (160) zugewandten Seite der Membran (120) begrenzt wird, und eine Druckausgleichskammer (112), die von der der Klebefolie (160) abgewandten Seite der Membran (120) begrenzt wird, evakuiert, worauf die Druckausgleichskammer (112) belüftet wird.

3. Verfahren nach Anspruch 1 oder Anspruch 2, **gekennzeichnet durch** das folgende Merkmal:
a. Das mindestens eine Stempelmittel (200) umfasst zumindest einen ausfahrbaren Kolben (202) und einen Stempelkopf (203).

4. Verfahren nach einem der vorhergehenden Ansprüche, **gekennzeichnet durch** das folgende Merkmal:
a. Ein Vorschub des Stempelkopfes (203) erfolgt in Koordination mit der Einstellung des Unterdrucks.

5. Verfahren nach Anspruch 4, **gekennzeichnet durch** mindestens eines der folgenden Merkmale:
a. Die Koordination des Vorschubs des Stempelkopfes (203) mit der Einstellung des Unterdrucks erfolgt durch zeitliche Abstimmung.
b. Die Koordination des Vorschubs des Stempelkopfes (203) mit der Einstellung des Unterdrucks erfolgt in Abhängigkeit von dem sich tatsächlich einstellenden Unterdruck.

6. Verfahren nach einem der vorhergehenden Ansprüche, **gekennzeichnet durch** mindestens eines der folgenden zusätzlichen Merkmale:
a. Die elastische Membran (120) besteht aus einem elastischen Polymermaterial.
b. die elastische Membran (120) weist eine gleichmäßige Dicke auf.
c. die elastische Membran (120) weist Schwächungs- und oder Verstärkungsbereiche zur gezielten Beeinflussung der Geometrie des gewölbten Zustands auf.

7. Verfahren nach einem der vorhergehenden Ansprüche, **gekennzeichnet durch** mindestens eines der folgenden zusätzlichen Merkmale:
a. Das Positionieren der Klebefolie (160) zwischen der Oberfläche des Bauteils (170) und der elastischen Membran (120) erfolgt mit Hilfe einer Montagefolie (150), an der die Klebefolie (160) mit ihrer der Klebeschicht abgewandten Seite haftet.
b. Zum Positionieren der Klebefolie (160) wird die Montagefolie (150) an oder in einem Rahmen (130) fixiert.
c. Nach dem Anpressen der Klebefolie (160) an die Oberfläche des Bauteils (170) wird die Montagefolie (150) von der Klebefolie (160) abgezogen.

8. Verfahren nach einem der vorhergehenden Ansprüche, wobei das Verfahren zur Produktion von Kraftfahrzeugen eingesetzt wird und das Bauteil (170) eine Kraftfahrzeugkarosserie oder Teil einer Kraftfahrzeugkarosserie oder ein Anbauteil ist, umfassend die Schritte:
a. Beschichtung einer Kraftfahrzeugkarosserie oder von Teilen einer Kraftfahrzeugkarosserie mit mindestens einem Lack,
b. Trocknen und/oder Aushärten des mindestens einen Lacks,
c. Montage von Anbauteilen an tragende Komponenten der mit dem getrockneten und/oder ausgehärteten mindestens einen Lack beschichteten Kraftfahrzeugkarosserie, sowie
d. Aufbringen der Klebefolie (160) auf eine Oberfläche der mit dem getrockneten und/oder ausgehärteten mindestens einen Lack beschichteten Kraftfahrzeugkarosserie oder Teilen der Kraftfahrzeugkarosserie oder eines der daran montierten Anbauteile,
wobei das Aufbringen der Klebefolie (160) gemäß einem der vorhergehenden Ansprüche erfolgt.

9. Verfahren nach einem der vorhergehenden Ansprüche, **gekennzeichnet durch** mindestens eines der folgenden zusätzlichen Merkmale:
a. Die Klebefolie (160) umfasst eine Trägerfolie, die auf einer Seite die Klebeschicht und auf einer anderen Seite eine Lackschicht aufweist.
b. Die Trägerfolie ist eine Kunststofffolie, eine Metallfolie oder eine Metall-Kunststoff-Kompositfolie.
c. Die Trägerfolie weist eine Dicke im Bereich von 10 µm bis 120 µm auf.
d. Die Klebeschicht weist eine Dicke im Bereich von 10 µm bis 80 µm auf.
e. Die Klebeschicht weist eine gleichmäßige Dicke auf.
f. Die Klebeschicht besteht aus einer homogenen Klebemasse.
g. Die Klebeschicht weist eine Fläche im Bereich von 10 cm² bis 8 m² auf.
h. Die Lackschicht weist eine Dicke im Bereich von 20 µm bis 150 µm auf.

10. Werkzeug (100) zum Aufbringen einer Klebefolie (160) auf eine Oberfläche eines Bauteils (170), insbesondere in einem Verfahren nach einem der vorhergehenden Ansprüche, mit den folgenden Merkmalen:
a. Es umfasst eine elastische Membran (120) zum vollflächigen Anpressen der Klebefolie (160) auf die Oberfläche des Bauteils.
b. Es umfasst mindestens ein Mittel zur Positionierung der Klebefolie (160) zwischen der Oberfläche des Bauteils (170) und der elastischen Membran (120).
c. Es umfasst ein Mittel zur Erzeugung eines Unterdrucks auf der der Klebefolie (160) zugewandten Seite der elastischen Membran (120) und/oder ein Mittel zur Erzeugung eines Unterdrucks auf der der Klebefolie (160) abgewandten Seite der elastischen Membran (120).
gekennzeichnet mit dem folgenden Merkmal:
d. Es umfasst mindestens ein Stempelmittel zum Drücken der elastischen Membran (120) mitsamt der Klebefolie (160) gegen die Oberfläche des Bauteils (170) zur Stabilisierung des Bauteils (170) während des Aufbringens der Klebefolie.

11. Werkzeug nach Anspruch 10, **gekennzeichnet durch** das folgende zusätzliche Merkmal:
a. Es umfasst einen Rahmen, der dazu ausgebildet ist, gemeinsam mit der zu beklebenden Oberfläche des Bauteils (170) und der elastischen Membran (120) eine Unterdruckkammer (141) zu bilden, in der die Klebefolie (160) angeordnet ist und in welche die elastische Membran (120) sich beim Beaufschlagen der Unterdruckkammer (141) mit einem Unterdruck wölben kann.

12. Werkzeug nach Anspruch 11, **gekennzeichnet durch** mindestens eines der folgenden zusätzlichen Merkmale:
a. Der Rahmen ist rechteckig ausgebildet.
b. Der Rahmen weist eine erste Öffnung auf, die von der Membran (120) verschlossen ist.
c. Der Rahmen weist mindestens ein elastisches Dichtelement (144) auf, das dichtend auf der Oberfläche des Bauteils (170) aufliegen kann.
d. Der Rahmen umfasst eine zweite Öffnung, an deren Rändern das mindestens eine elastische Dichtelement (144) fixiert ist.
e. Der Rahmen umfasst mindestens einen Anschluss (148) für eine Unterdruckquelle, über den die Unterdruckkammer (141) mit Unterdruck beaufschlagt werden kann.
f. Der Rahmen umfasst als Mittel zur Fixierung der Klebefolie (160) mindestens eine Halterung.

13. Werkzeug nach Anspruch 11 oder Anspruch 12, **gekennzeichnet durch** mindestens eines der folgenden zusätzlichen Merkmale:
a. Der Rahmen ist aus zwei oder mehr Teilrahmen (130, 140) zusammengesetzt.
b. Der Rahmen ist rechteckig ausgebildet und aus den zwei oder mehr rechteckigen Teilrahmen (130, 140) zusammengesetzt.
c. Der Rahmen umfasst einen ersten rechteckigen Teilrahmen (140), an dem mindestens ein elastisches Dichtelement (144) fixiert ist und der mindestens einen Anschluss (148) für eine Unterdruckquelle umfasst.
d. Der Rahmen umfasst einen zweiten rechteckigen Teilrahmen (130), der mindestens eine Halterung für die Klebefolie (160) umfasst.

14. Werkzeug nach einem der Ansprüche 10 bis 13, **gekennzeichnet durch** mindestens eines der folgenden zusätzlichen Merkmale:
a. Es umfasst eine Druckausgleichskammer (112), die unter anderem von der elastischen Membran (120) begrenzt wird.
b. Es umfasst mindestens einen Anschluss für eine Druck- oder eine Unterdruckquelle, der in die Druckausgleichskammer (112) führt.
c. Es umfasst mindestens ein Ventil (114), über das die Druckausgleichskammer (112) belüftet werden kann.

15. Werkzeug nach einem der Ansprüche 10 bis 14, **dadurch gekennzeichnet, dass** es in einer Fertigungsstraße zur Produktion von Kraftfahrzeugen angeordnet ist.

## Claims

1. Method for applying an adhesive film to a component, comprising the steps
a. providing a component (170),
b. providing an adhesive film (160) which comprises an adhesive layer,
c. applying the adhesive film to a surface of the component (170),
wherein, to apply the adhesive film (160), the following measures are taken:
d. the adhesive film (160) is positioned between the surface of the component (170) and an elastic membrane (120),
e. the elastic membrane (120) is transferred at least in certain regions into a curved state with a convex and a concave side and is brought into contact with the surface of the component (170) with the convex side first, such that the adhesive layer of the adhesive film (160) is pressed onto the surface of the component (170) in a full-area manner by the elastic membrane (120),
f. the adhesive layer of the adhesive film (160) is pressed onto the surface of the component (170) in a full-area manner by a negative pressure being applied to that side of the elastic membrane (120) which faces towards the adhesive film (160), and,
g. to stabilize the component (170) against deformation brought about by this negative pressure, the elastic membrane (120) along with the adhesive film (160) is pushed against the surface of the component (170) with the aid of a plunger means (200).

2. Method according to Claim 1, **characterized by** at least one of the following features:
a. the negative pressure applied to that side of the elastic membrane (120) which faces towards the adhesive film (160) is present relative to a pressure which is applied to that side of the elastic membrane (120) which faces away from the adhesive film (160) and/or a pressure which is applied to a rear side of the component (170).
b. the negative pressure is a pressure < 1 bar.
c. to set the negative pressure, a negative-pressure chamber, which is delimited by that side of the membrane (120) which faces towards the adhesive film (160), and a pressure equalizing chamber (112), which is delimited by that side of the membrane (120) which faces away from the adhesive film (160), are evacuated, whereupon the pressure equalizing chamber (112) is vented.

3. Method according to Claim 1 or Claim 2, **characterized by** the following feature:
a. the at least one plunger means (200) comprises at least one extendable piston (202) and a plunger head (203).

4. Method according to one of the preceding claims, **characterized by** the following feature:
a. the plunger head (203) is advanced in coordination with the setting of the negative pressure.

5. Method according to Claim 4, **characterized by** at least one of the following features:
a. the advancement of the plunger head (203) is coordinated with the setting of the negative pressure by temporal coordination.
b. the advancement of the plunger head (203) is coordinated with the setting of the negative pressure in dependence on the negative pressure actually set.

6. Method according to one of the preceding claims, **characterized by** at least one of the following additional features:
a. the elastic membrane (120) is composed of an elastic polymer material.
b. the elastic membrane (120) has a uniform thickness.
c. the elastic membrane (120) has weakened regions and/or reinforcing regions for influencing the geometry of the curved state in a targeted manner.

7. Method according to one of the preceding claims, **characterized by** at least one of the following additional features:
a. the adhesive film (160) is positioned between the surface of the component (170) and the elastic membrane (120) with the aid of a mounting film (150), to which the adhesive film (160) adheres by way of its side which faces away from the adhesive layer.
b. to position the adhesive film (160), the mounting film (150) is fixed on or in a frame (130).
c. after the adhesive film (160) has been pressed onto the surface of the component (170), the mounting film (150) is pulled off from the adhesive film (160).

8. Method according to one of the preceding claims, wherein the method is used for the production of motor vehicles and the component (170) is a motor vehicle body or part of a motor vehicle body or an attachment part, comprising the steps:
a. coating a motor vehicle body or parts of a motor vehicle body with at least one paint,
b. drying and/or hardening the at least one paint,
c. mounting attachment parts on load-bearing component parts of the motor vehicle body which has been coated with the at least one paint that has been dried and/or hardened, and
d. applying the adhesive film (160) to a surface of the motor vehicle body which has been coated with the at least one paint that has been dried and/or hardened or parts of the motor vehicle body or one of the attachment parts mounted thereon,
wherein the adhesive film (160) is applied according to one of the preceding claims.

9. Method according to one of the preceding claims, **characterized by** at least one of the following additional features:
a. the adhesive film (160) comprises a carrier film which has the adhesive layer on one side and a paint layer on another side.
b. the carrier film is a plastics film, a metal film or a metal-plastic composite film.
c. the carrier film has a thickness in the range of 10 µm to 120 µm.
d. the adhesive layer has a thickness in the range of 10 µm to 80 µm.
e. the adhesive layer has a uniform thickness.
f. the adhesive layer is composed of a homogeneous adhesive composition.
g. the adhesive layer has a surface area in the range of 10 cm² to 8 m².
h. the paint layer has a thickness in the range of 20 µm to 150 µm.

10. Tool (100) for applying an adhesive film (160) to a surface of a component (170), in particular in a method according to one of the preceding claims, with the following features:
a. it comprises an elastic membrane (120) for pressing the adhesive film (160) onto the surface of the component in a full-area manner.
b. it comprises at least one means for positioning the adhesive film (160) between the surface of the component (170) and the elastic membrane (120).
c. it comprises a means for generating a negative pressure on that side of the elastic membrane (120) which faces towards the adhesive film (160) and/or a means for generating a negative pressure on that side of the elastic membrane (120) which faces away from the adhesive film (160).
**characterized in that**:
d. it comprises at least one plunger means for pushing the elastic membrane (120) along with the adhesive film (160) against the surface of the component (170) to stabilize the component (170) during the application of the adhesive film.

11. Tool according to Claim 10, **characterized by** the following additional feature:
a. it comprises a frame which is configured to form, together with the surface, which is to be provided with adhesive, of the component (170) and the elastic membrane (120), a negative-pressure chamber (141) in which the adhesive film (160) is arranged and into which the elastic membrane (120) can curve when a negative pressure is being applied to the negative-pressure chamber (141).

12. Tool according to Claim 11, **characterized by** at least one of the following additional features:
a. the frame is of rectangular configuration.
b. the frame has a first opening which is closed by the membrane (120).
c. the frame has at least one elastic sealing element (144) which can rest sealingly on the surface of the component (170).
d. the frame comprises a second opening, the at least one elastic sealing element (144) being fixed to the edges of said second opening.
e. the frame comprises at least one connection (148) for a negative-pressure source, via which negative pressure can be applied to the negative-pressure chamber (141).
f. the frame comprises at least one holder as a means for fixing the adhesive film (160).

13. Tool according to Claim 11 or Claim 12, **characterized by** at least one of the following additional features:
a. the frame is assembled from two or more sub-frames (130, 140).
b. the frame is of rectangular configuration and assembled from the two or more rectangular sub-frames (130, 140).
c. the frame comprises a first rectangular sub-frame (140), on which at least one elastic sealing element (144) is fixed and which comprises at least one connection (148) for a negative-pressure source.
d. the frame comprises a second rectangular sub-frame (130), which comprises at least one holder for the adhesive film (160).

14. Tool according to one of Claims 10 to 13, **characterized by** at least one of the following additional features:
a. it comprises a pressure equalizing chamber (112) which is delimited, inter alia, by the elastic membrane (120).
b. it comprises at least one connection for a pressure source or a negative-pressure source, said at least one connection leading into the pressure equalizing chamber (112).
c. it comprises at least one valve (114) via which the pressure equalizing chamber (112) can be vented.

15. Tool according to one of Claims 10 to 14, **characterized in that** it is arranged in a production line for producing motor vehicles.

## Revendications

1. Procédé pour l'application d'un film adhésif sur une pièce de construction, comprenant les étapes :
a. mise à disposition d'une pièce de construction (170),
b. mise à disposition d'un film adhésif (160) qui comprend une couche adhésive,
c. application du film adhésif sur une surface de la pièce de construction (170),
dans lequel les dispositions suivantes sont prises pour l'application du film adhésif (160) :
d. le film adhésif (160) est positionné entre la surface de la pièce de construction (170) et une membrane élastique (120),
e. la membrane élastique (120) est transformée au moins pas zones en un état bombé avec une face concave et une face convexe, et mise en contact par la face convexe en avant avec la surface de la pièce de construction (170), de sorte que la couche adhésive du film adhésif (160) est pressée sur toute sa surface par la membrane élastique (120) sur la surface de la pièce de construction (170),
f. le pressage sur toute sa surface de la couche adhésive du film adhésif (160) sur la surface de la pièce de construction (170) est réalisé par le fait que la face tournée vers le film adhésif (160) de la membrane élastique (120) est mise sous une dépression, et
g. pour la stabilisation du la pièce de construction (170) contre une déformation causée par cette dépression, la membrane élastique (120) est pressée conjointement avec le film adhésif (160) contre la surface de la pièce de construction (170) à l'aide d'un moyen de tamponnement (200).

2. Procédé selon la revendication 1, **caractérisé par** au moins l'une des caractéristiques suivantes :
a la dépression sous laquelle est mise la face tournée vers le film adhésif (160) de la membrane élastique (120) est par rapport à une pression sous laquelle est mise la face opposée au film adhésif (160) de la membrane élastique (120) et/ou à une pression sous laquelle est mise une face arrière de la pièce de construction (170),
b. la dépression est une pression < 1 bar,
c. pour l'établissement de la dépression, une chambre de dépression, qui est limitée par la face tournée vers le film adhésif (160) de la membrane (120), et une chambre d'équilibrage (112) de pression, qui est limitée par la face opposée au film adhésif (160) de la membrane (120), sont mises sous vide, à la suite de quoi la chambre d'équilibrage (112) de pression est ventilée.

3. Procédé selon la revendication 1 ou la revendication 2, **caractérisé par** la caractéristique suivante :
a. ledit au moins un moyen de tamponnement (200) comprend au moins un piston extensible (202) et une tête (203) de tampon.

4. Procédé selon l'une quelconque des revendications précédentes, **caractérisé par** la caractéristique suivante :
a. un avancement de la tête (203) de tampon s'effectue en coordination avec l'établissement de la dépression.

5. Procédé selon la revendication 4, **caractérisé par** au moins une des caractéristiques suivantes :
a. la coordination de l'avancement de la tête (203) de tampon avec l'établissement de la dépression s'effectue par synchronisation,
b. la coordination de l'avancement de la tête (203) de tampon avec l'établissement de la dépression s'effectue en fonction de la dépression s'établissant en réalité.

6. Procédé selon l'une quelconque des revendications précédentes, **caractérisé par** au moins une des caractéristiques supplémentaires suivantes :
a. la membrane élastique (120) consiste en une matière polymère élastique,
b. la membrane élastique (120) présente une épaisseur uniforme,
c. la membrane élastique (120) présente des zones d'affaiblissement et/ou des zones de renforcement destinées à exercer une influence ciblée sur la géométrie de l'état bombé.

7. Procédé selon l'une quelconque des revendications précédentes, **caractérisé par** au moins une des caractéristiques supplémentaires suivantes :
a. le positionnement du film adhésif (160) entre la surface de la pièce de construction (170) et la membrane élastique (120) s'effectue à l'aide d'un film de montage (150) auquel le film adhésif (160) adhère par sa face opposée à la couche adhésive,
b. pour le positionnement du film adhésif (160) le film de montage (150) est fixé sur ou dans un cadre (130),
c. Après le pressage du film adhésif (160) sur la surface de la pièce de construction (170) le film de montage (150) est retiré du film adhésif (160).

8. Procédé selon l'une quelconque des revendications précédentes, le procédé étant utilisé pour la production de véhicules automobiles et la pièce de construction (170) étant une carrosserie de véhicule automobile ou partie d'une carrosserie de véhicule automobile ou une pièce de construction à ajouter, comprenant les étapes :
a. revêtement d'une carrosserie de véhicule automobile ou de parties d'une carrosserie de véhicule automobile avec au moins une peinture,
b. séchage et/ou durcissement de ladite au moins une peinture,
c. montage de pièces de construction à ajouter, sur des composants porteurs de la carrosserie de véhicule automobile revêtue avec ladite au moins une peinture séchée et/ou durcie, ainsi que
d. application du film adhésif (160) sur une surface de la carrosserie de véhicule automobile ou de parties de la carrosserie de véhicule automobile revêtue(s) avec ladite au moins une peinture séchée et/ou durcie ou d'une des pièces de construction à ajouter, montées sur celle(s)-ci,
l'application du film adhésif (160) s'effectuant selon l'une quelconque des revendications précédentes.

9. Procédé selon l'une quelconque des revendications précédentes, **caractérisé par** au moins une des caractéristiques supplémentaires suivantes :
a. le film adhésif (160) comprend un film de support qui comporte sur une face la couche adhésive et sur une autre face une couche de peinture,
b. le film de support est un film en matière plastique, une feuille de métal ou une feuille composite de métal-matière plastique,
c. le film de support présente une épaisseur dans la plage de 10 µm à 120 µm,
d. la couche adhésive présente une épaisseur dans la plage de 10 µm à 80 µm,
e. la couche adhésive présente une épaisseur uniforme,
f. la couche adhésive est constituée d'une masse adhésive homogène,
g. la couche adhésive présente une surface dans la plage de 10 cm² à 8 m²,
h. la couche de peinture présente une épaisseur dans la plage de 20 µm à 150 µm.

10. Outil (100) destiné à l'application d'un film adhésif (160) sur une surface d'une pièce de construction (170), en particulier dans un procédé selon l'une quelconque des revendications précédentes, ayant les caractéristiques suivantes :
a. il comprend une membrane élastique (120) destinée au pressage sur toute sa surface du film adhésif (160) sur la surface de la pièce de construction,
b. il comprend au moins un moyen pour le positionnement du film adhésif (160) entre la surface de la pièce de construction (170) et la membrane élastique (120),
c. il comprend un moyen pour la production d'une dépression sur la face tournée vers le film adhésif (160) de la membrane élastique (120) et/ou un moyen pour la production d'une dépression sur la face opposée au film adhésif (160) de la membrane élastique (120),
**caractérisé par** la caractéristique suivante :
d. il comprend au moins un moyen de tamponnement destiné au pressage de la membrane élastique (120) conjointement avec le film adhésif (160) contre la surface de la pièce de construction (170) pour la stabilisation de la pièce de construction (170) pendant l'application du film adhésif.

11. Outil selon la revendication 10, **caractérisé par** la caractéristique supplémentaire suivante :
a. il comprend un cadre, qui est configuré pour former, conjointement avec la surface à coller de la pièce de construction (170), et la membrane élastique (120), une chambre de dépression (141), dans laquelle est disposé le film adhésif (160) et dans laquelle la membrane élastique (120) peut être bombée lorsque la chambre de dépression (141) est mise sous une dépression.

12. Outil selon la revendication 11, **caractérisé par** au moins une des caractéristiques supplémentaires suivantes :
a. le cadre a une configuration rectangulaire,
b. le cadre présente une première ouverture qui est fermée par la membrane (120),
c. le cadre présente au moins un élément d'étanchéité élastique (144) qui peut reposer de manière étanche sur la surface de la pièce de construction (170),
d. le cadre comprend une seconde ouverture, sur les bords de laquelle est fixé au moins un élément d'étanchéité élastique (144),
e. le cadre comprend au moins un raccord (148) pour une source de dépression, via lequel la chambre de dépression (141) peut être mise en dépression,
f. la chambre comprend au moins une attache en tant que moyen destiné à la fixation du film adhésif (160).

13. Outil selon la revendication 11 ou la revendication 12, **caractérisé par** au moins une des caractéristiques supplémentaires suivantes :
a. le cadre est composé de deux ou plus de deux cadres partiels (130, 140),
b. le cadre a une configuration rectangulaire et est composé de deux ou plus de deux cadres partiels rectangulaires (130, 140),
c. le cadre comprend un premier cadre partiel rectangulaire (140) sur lequel est fixé au moins un élément d'étanchéité élastique (144) et qui comprend au moins un raccord (148) pour une source de dépression,
d. le cadre comprend un second cadre partiel rectangulaire (130) qui comprend au moins une attache pour le film adhésif (160).

14. Outil selon l'une quelconque des revendications 10 à 13, **caractérisé par** au moins une des caractéristiques supplémentaires suivantes :
a. il comprend une chambre d'équilibrage (112) de pression, qui est limitée en particulier par la membrane élastique (120),
b. il comprend au moins un raccord pour une source de pression ou une source de dépression, qui conduit dans la chambre d'équilibrage (112) de pression,
c. il comprend au moins une vanne (114) via laquelle la chambre d'équilibrage (112) de pression peut être ventilée.

15. Outil selon l'une quelconque des revendications 10 à 14, **caractérisé en ce qu'**il est disposé dans une chaîne de fabrication destinée à la production de véhicules automobiles.
